# EUROPEAN PATENT SPECIFICATION

(11) **EP 4 068 837 B1**
(45) Date of publication and mention of the grant of the patent: **01.05.2024**
(21) Application number: 21166632.6
(22) Date of filing: 01.04.2021
(51) Int. Cl.: H04W 24/02, H04W 24/08, H04W 24/10

(54) **MEASUREMENT REPORTING WITH CHANGING MEASUREMENT MODES IN WIRELESS COMMUNICATION SYSTEM**
MESSBERICHTERSTATTUNG MIT SICH ÄNDERNDEN MESSMODI IN EINEM DRAHTLOSEN KOMMUNIKATIONSSYSTEM
RAPPORT DE MESURE AVEC CHANGEMENT DE MODES DE MESURE DANS UN SYSTÈME DE COMMUNICATION SANS FIL

(43) Date of publication of application: 05.10.2022
(73) Proprietor: Nokia Technologies Oy, 02610 Espoo (FI)
(72) Inventor: DIMNIK, Riikka Karoliina, 00720 Helsinki (FI); DALSGAARD, Lars, 90230 Oulu (FI)
(74) Representative: TBK

(56) References cited:
- WO-A1-2020/191558
- US-A1- 2017 150 384
- US-A1- 2020 029 256
- ERICSSON: "MDT scope and requirements", 3GPP DRAFT; R2-2007667, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Online meeting; 20200817 - 20200828 6 August 2020 (2020-08-06), XP051911103, Retrieved from the Internet: URL:https://ftp.3gpp.org/tsg_ran/WG2_RL2/T SGR2_111-e/Docs/R2-2007667.zip R2-2007667 - MDT scope and requirements.docx [retrieved on 2020-08-06]
- HUAWEI ET AL: "Reporting relaxations for power consumption reduction in MTC UEs", 3GPP DRAFT; R1-150036, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933253, Retrieved from the Internet: URL:http://www.3gpp.org/ftp/Meetings_3GPP_ SYNC/RAN1/Docs/ [retrieved on 2015-02-08]

## Description

### Field

The present disclosure relates to measurement reporting with changing measurement modes in a wireless communication system. More specifically, the present disclosure relates to measures/mechanisms (including methods, apparatuses (i.e. devices, entities, elements and/or functions) and computer program products) for enabling/realizing measurement reporting with changing measurement modes in a wireless communication system, i.e. measurement reporting when a measurement mode of a radio access related measurement changes.

### Background

Basically, the present disclosure relates to changing measurement modes in a wireless communication system, e.g. a 3GPP-standardized wireless communication system, such as a 5G/NR system.

In 3GPP standardization, relaxing UE measurements (i.e. radio access related measurement) is an issue in the context of achieving UE power saving enhancements for a 5G/NR system. In this regard, various conditions, schemes and operations for changing between a normal measurement mode for normal UE measurements and a relaxed measurement mode for relaxed UE measurements are discussed.

Prior art examples of reporting measurements are provided by US 2017/150384 A1, EP 3 849 225 A1, US 2020/029256 A1, ERICSSON: "MDT scope and requirements",3GPP DRAFT; R2-2007667,, XP051911103, and HUAWEI ET AL: "Reporting relaxations for power consumption reduction in MTC UEs",3GPP DRAFT; R1-150036, XP050933253.

For example, it is discussed under which criteria the UE can enter/exit a relaxed measurement mode, and whether fulfilling the criteria is to be defined by the UE or by the network (e.g. the gNB controlling/serving the UE) or by the UE and the network (e.g. the gNB controlling/serving the UE) together. In the case where the UE is allowed to make the decision about measurement relaxation, i.e. when to enter/exit relaxed-mode measurements, (completely or partly) independently, it is not defined how measurement reporting from the UE towards the network (i.e. the gNB controlling/serving the UE) is done.

Therefore, the network lacks clear visibility of the measurement mode applied by the UE. For example, the network may not know whether a received measurement report is based on normal or relaxed measurements, how the contents of a received measurement report is to be handled or appraised, when the next measurement report is to be expected, or the like.

Accordingly, there is currently no solution for but room for improvement in the handling of measurement reporting with changing measurement modes in a wireless communication system.

Therefore, there is a desire/need for a solution for (enabling/realizing) measurement reporting with changing measurement modes in a wireless communication system.

### Summary

Various exemplifying embodiments of the present disclosure aim at addressing at least part of the above issues and/or problems and drawbacks.

Various aspects of exemplifying embodiments of the present disclosure are set out in the appended claims.

The scope of protection sought for various embodiments of the invention is set out by the independent claims. The embodiments and/or examples and features, if any, described in this specification that do not fall under the scope of the independent claims are to be interpreted as examples useful for understanding various embodiments of the invention.

The above mentioned objects are achieved by what is defined in the appended independent claims. Advantageous modifications thereof are set forth in the appended dependent claims.

By way of exemplifying embodiments of the present disclosure, measurement reporting with changing measurement modes in a wireless communication system, i.e. measurement reporting when a measurement mode of a radio access related measurement changes, can be enabled/realized.

### Brief description of the drawings

In the following, the present disclosure will be described in greater detail by way of non-limiting examples with reference to the accompanying drawings, in which
Figure 1 shows a flowchart illustrating an example of a method according to at least one exemplifying embodiment,
Figure 2 shows a sequence diagram illustrating an example of processes according to at least one exemplifying embodiment,
Figure 3 shows a flowchart illustrating an example of a method according to at least one exemplifying embodiment,
Figure 4 shows a flowchart illustrating an example of a method according to at least one exemplifying embodiment,
Figure 5 shows a sequence diagram illustrating an example of a process according to at least one exemplifying embodiment,
Figure 6 shows a flowchart illustrating an example of a method according to at least one exemplifying embodiment,
Figure 7 shows a sequence diagram illustrating an example of a process according to at least one exemplifying embodiment,
Figure 8 shows a schematic diagram illustrating an example of a (constructional) structure of apparatuses according to at least one exemplifying embodiment, and
Figure 9 shows a schematic diagram illustrating an example of a (functional) structure of apparatuses according to at least one exemplifying embodiment.

### Detailed description

The present disclosure is described herein with reference to particular non-limiting examples and to what are presently considered to be conceivable (examples of) embodiments. A person skilled in the art will appreciate that the present disclosure is by no means limited to these examples and embodiments, and may be more broadly applied.

It is to be noted that the following description mainly refers to specifications being used as non-limiting examples for certain exemplifying network configurations and system deployments. Namely, the following description mainly refers to 3GPP standards, specially referring to 5G/NR standardization, being used as non-limiting examples. As such, the description of exemplifying embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as complying with what is described herein and/or exemplifying embodiments described herein are applicable to it.

Hereinafter, various exemplifying embodiments and implementations of the present disclosure and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative/exemplifying, and any other order of respective operations or actions is equally conceivable, if feasible.

According to exemplifying embodiments of the present disclosure, in general terms, there are provided measures/mechanisms (including methods, apparatuses (i.e. devices, entities, elements and/or functions) and computer program products) for enabling/realizing measurement reporting with changing measurement modes in a wireless communication system, i.e. measurement reporting when a measurement mode of a radio access related measurement changes.

According to exemplifying embodiments of the present disclosure, in general terms, after deciding on a change of a measurement mode (being used) between a normal measurement mode and a relaxed measurement mode, an information about the change of the measurement mode (to be used) is included in a measurement report, said information specifying whether the normal measurement mode and/or the relaxed measurement mode is applied for or from the current measurement report and/or the next measurement report or reports.

Generally, the exemplifying embodiments of the present disclosure are applicable to any kind of measurements and normal/relaxed measurement modes (i.e. the feasibility of performing the respective measurements in a normal manner as normal measurements and/or in a relaxed manner as relaxed measurements).

A measurement in the meaning of the present disclosure may refer to any kind of access related measurement in a wireless communication system, which may be performed and/or controlled by a communication entity such as a UE (also referred to as UE measurement). For example, when hereinafter reference is made to a measurement, such measurement may encompass (a measurement of) one or more of Radio Link Monitoring (RLM), Beam Failure Detection (BFD), Radio Resource Management (RRM), Reference Signal Received Power (RSRP), such as Layer 1 Reference Signal Received Power (L1-RSRP), or the like.

A measurement mode in the meaning of the present disclosure may refer to any kind of mode, scheme, operation or control for performing one or more (kinds of) measurements, such as an access related measurement in a wireless communication system. A relaxed measurement mode, i.e. a mode, scheme, operation or control for performing a relaxed measurement, provides for some kind of relaxation in performing the measurement as compared with a normal measurement mode. Specifically, a relaxed measurement mode may encompass any kind of mode, scheme, operation or control, which provides some kind of relaxation for the communication entity (e.g. the UE) in performing the measurement, e.g. for enabling UE benefits such as UE power saving, as compared with a normal measurement mode. For example, such relaxation, e.g. for UE power saving, may be accomplished by different means, e.g. by extending a measurement or evaluation interval/period such that measurements are to be performed less frequently than in a normal measurement mode, lowering a number of measurement instances or samples for/in a measurement cycle/period/event such that less measurements are to be performed than in a normal measurement mode, lowering requirements/demands for a measurement such that less effort is required for an individual measurement than in a normal measurement mode, or the like. In an alternative, the relaxed measurement mode may also include reducing the measurement to the extent of stopping the measurement. As one example, in 3GPP Rel. 17, a relaxation in the relaxed measurement mode may include extending the RRM/RLM/BFD measurement interval/period, e.g. by a predefined or configurable scaling or relaxation factor with respect to the RRM/RLM/BFD measurement interval/period in the normal measurement mode.

A measurement report in the meaning of the present disclosure may refer to any kind of message, signal, signaling or notification, including any type of measurement report, from an entity performing the related measurement (e.g. communication entity such as a UE) to a serving and/or controlling entity (e.g. a control or network entity such as a gNB). Specifically, a measurement report may be related to the applicable/applied measurement mode and/or the associated measurement. For example, besides other contents as described below, a measurement report may contain one or more measurement results or samples resulting from one or more measurements in one or more measurement modes.

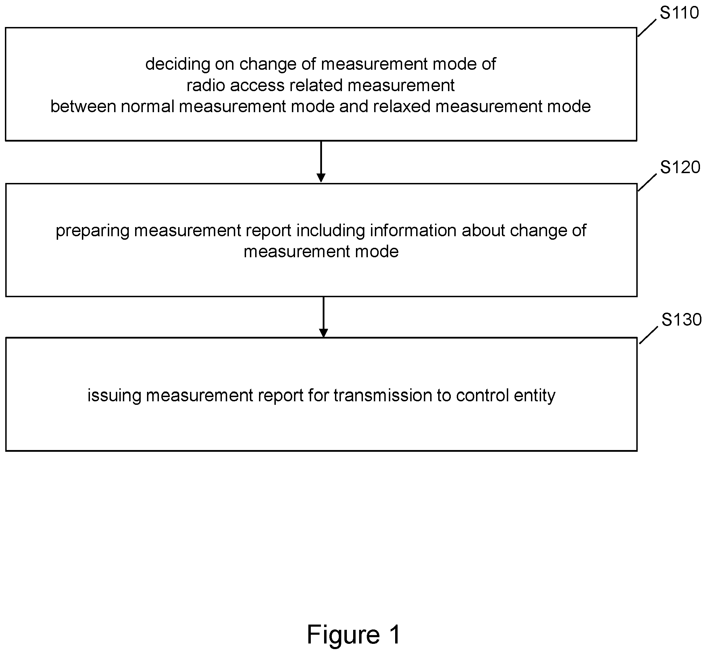

Figure 1 shows a flowchart illustrating an example of a method according to at least one exemplifying embodiment. The method of Figure 1 is a method of (or, stated in other words, operable or for use in/by) a communication entity, which may be referred to as or implemented as/by communication device, element or function, in a wireless communication system, such as e.g. a UE in a 5G/NR system. The communication entity, such as the UE, may perform this method in or as part of a measurement reporting period, event or operation.

As shown in Figure 1, the thus illustrated method comprises an operation (S110) of deciding on a change of a measurement mode (being used) of a radio access related measurement in the wireless communication system between a normal measurement mode and a relaxed measurement mode, an operation (S120) of preparing a measurement report including an information about the change of the measurement mode (to be used), and an operation (S130) of issuing the measurement report for transmission to a control entity controlling and/or serving the communication entity (which may be a control entity, which may be referred to as or implemented as/by communication control device, element or function, in the wireless communication system, such as e.g. a gNB in a 5G/NR system).

According to at least one exemplifying embodiment, the information included in (i.e. inserted or added into) the measurement report specifies whether the normal measurement mode and/or the relaxed measurement mode is applied for or from the current measurement report and/or the next measurement report or reports. That is, the measurement mode information can apply/relate to (i) the current/next measurement report (i.e. a one-time-per-report information specifying that the results/samples in the current/next report is based on relaxed/normal/mixed mode), (ii) the current measurement report and subsequent measurement reports (i.e. an information which is valid until a new information is given in the future), or (iii) the next measurement report and subsequent measurement reports (i.e. an information which is valid until a new information is given in the future). For example, this information may specify that the normal measurement mode is applied for the current measurement report and/or the relaxed measurement mode is applied for the next measurement report, the relaxed measurement report is applied for the current and the next measurement mode, the normal or relaxed measurement mode is applied from the current or the next measurement report (i.e. starting from the current or next measurement report and continuing thereafter (until another measurement mode information is provided in the future)), or the like. If the measurement mode is allowed to be changed in the middle of a measurement reporting period, event or operation, and the measurement results or samples used for a single measurement report may be based on both relaxed and normal measurements, this may also be indicated and, thus, the information may specify that both the normal and relaxed measurement modes are applied, i.e. a mixture of measurement modes, which again may be made in/for any one of the aforementioned cased (i), (ii) and (iii).

In this regard, it is to be noted that a measurement mode being applied for a measurement report means that the measurement report (type and/or contents) is in accordance with or based on the measurement mode, the one or more measurement results or samples in the measurement report are obtained by one or more measurements in accordance with the measurement mode, the measurement mode is applied (for one or more measurements) prior to issuance of the measurement report, or the like.

According to at least one exemplifying embodiment, the information included in (i.e. inserted or added into) the measurement report may comprise an indication of the applied measurement mode or modes and/or at least one characteristic of the applied measurement mode or modes. The indication may indicate that the normal measurement mode, the relaxed measurement mode or a mixture of the normal and relaxed measurement modes is applied for or from the measurement report and/or the next measurement report or reports. That is, the indication may be (included in) a field, flag or the like, which specifies 'relaxed', 'mixed' or 'normal'. The characteristics may comprise one or more of a measurement or evaluation interval/period in the normal measurement mode, a measurement or evaluation interval/period in the relaxed measurement mode, a scaling or relaxation factor for extending the measurement or evaluation interval/period in the relaxed measurement mode as comparted with the normal measurement mode, a relation between one or more measurement properties between the relaxed measurement mode and the normal measurement mode, or the like. That is, the characteristics may be (included in) a field giving more information about the applied measurement mode or modes (going beyond a mere indication such as 'relaxed', 'mixed' or 'normal'. Providing such characteristics may be useful when a single UE may use multiple different relaxation modes or different UEs may use multiple different relaxation modes, wherein the different relaxation modes exhibit different characteristics. The different types of information, i.e. indication and characteristics, may be used alone or together/combined to specify the measurement mode or modes for or from the current measurement report and/or the next measurement report or reports, i.e. any combination of indication and characteristics is possible (as specifying information) for the current and/or next measurement report/reports. For example, a field of indication or characteristics may be included to specify that the current measurement report is based on the normal/relaxed measurement mode, and/or a field of characteristics or indication may be included to specify that the next one or more measurement reports are based on the normal/relaxed measurement mode, or the like.

According to at least one exemplifying embodiment, the preparing operation may comprise including the information in/into an existing measurement report (i.e. a measurement report which is already generated/created or is generated/created for some reason and/or at some occasion other than then the mode change decision) or may comprise generating/creating a measurement report (which may be a measurement report specific to the mode change operation or a measurement report generated/created for some reason and/or at some occasion other than then the mode change decision) and including the information in/into the thus generated/created measurement report.

It is to be noted that the preparing operation (i.e. the including operation or the generating/creating operation) and/or the issuing operation may or may not be, but do not need to be, triggered by the mode change decision. That is, the mode change decision may but does not need to be a triggering condition for generation/creation and/or issuance of the measurement report including the information about the change of the measurement mode resulting from the mode change decision. Stated in other words, the information about the change of the measurement mode resulting from the mode change decision can be included in any measurement report to be issued by the communication entity (e.g. the UE) performing the method of Figure 1. Such measurement report may be generated/created and/or issued for any reason and/or at any occasion, such as at the end of the present measurement reporting period, event or operation, due to some measurement reporting trigger/reason, or the like. For example, the communication entity (e.g. the UE) may include the mode change information resulting from a mode change operation in some subsequent measurement report which is to be generated/created and/or issued anyway, i.e. at the usual or predetermined timing of generation/creation and/or issuance thereof. Accordingly, some time may pass and/or some other (measurement) operations can take place between the operations S110 and S120 and/or between the operations S120 and S130.

Although shown by separate blocks in Figure 1, a method according to at least one exemplifying embodiment may be such that preparing and issuing the measurement report may be accomplished in a single operation.

Although not shown in Figure 1, a method according to at least one exemplifying embodiment may also comprise an operation of changing the measurement mode for applying the another measurement mode. Such changing operation may be performed before, during or after the preparing operation or before, during or after the issuing operation. Also, a method according to at least one exemplifying embodiment may also comprise emitting and/or transmitting the measurement report to the control entity. Also, the measurement report of Figure 1 may comprise one or more reports, parts, sections, etc., and the specifying information is prepared and/or included/inserted in any one of these.

Although not shown in Figure 1, a method according to at least one exemplifying embodiment may be such that the deciding operation comprises an operation of verifying that a change condition for changing from a currently applied measurement mode to another measurement mode is fulfilled, and an operation of changing the measurement mode for applying the another measurement mode. Also, the deciding operation may comprise verifying that the UE is allowed to make the decision about measurement relaxation (completely or partly) independently, i.e. make the final decision (with or without consideration of a preceding partial or pre-decision by the network such as the gNB).

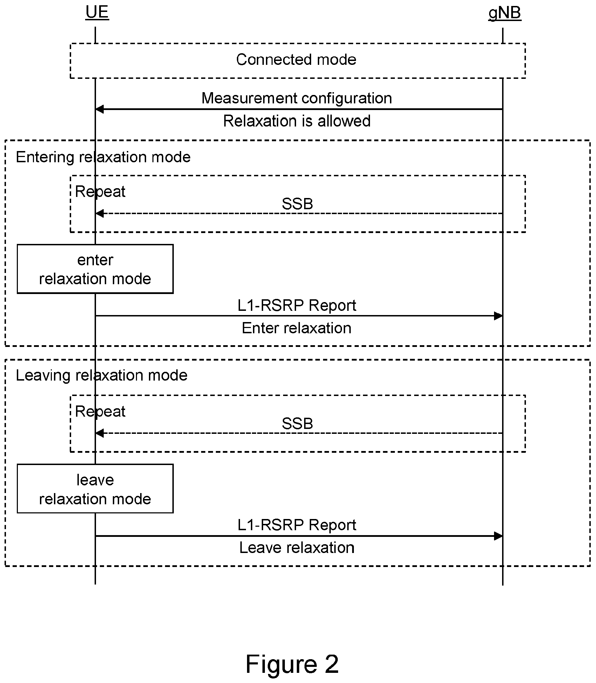

Figure 2 shows a sequence diagram illustrating an example of processes according to at least one exemplifying embodiment. The processes of Figure 2 are exemplarily based on the non-limiting but merely illustrative example use case that the measurement refers to a L1-RSRP measurement which is (to be) performed by the depicted UE residing in the cell of the depicted gNB, while the processes are equally applicable for any kind of measurement (such as e.g. one or more of RLM, BFD, RRM and RSRP), wherein the UE is configured to perform a method in accordance with the method of Figure 1.

As shown in Figure 2, it is assumed that the UE and the gNB have established and are operating in a connected mode, while the processes may be equally applicable in an idle/inactive mode of the UE. Further, it is assumed that the gNB sends to the UE a measurement configuration (which may configure that and possibly also how a L1-RSRP measurement is to be performed) and an indication of relaxation being allowed (which may mean or specify to the UE that the UE is allowed to make the final decision about measurement relaxation). Still further, it is assumed that the UE is currently set to applying a normal measurement mode (for the L1-RSRP measurement).

Based thereon, it is exemplified that a relaxed measurement mode (also referred to as relaxation mode) is to be entered, i.e. a change from the normal measurement mode to the relaxed measurement mode is to be performed. As the L1-RSRP measurement may be based on SSBs repeatedly sent from the gNB, this is illustrated for the sake of completeness. Then, the UE decides on the change of the measurement mode such that the relaxed measurement mode is entered. Thereafter, the UE prepares and issues a corresponding measurement report, which, in this example, is a L1-RSRP measurement report including an indication of the relaxed measurement mode being entered. Such indication corresponds to an information specifying that the relaxed measurement mode is applied for the current measurement report, which may be in the form of an indication and/or at least one characteristic of/for the relaxed measurement mode. Thereby, the gNB knows that the current measurement report from the UE will be based on the relaxed measurement mode (while the previous measurement report was still based on the normal measurement mode), and the gNB is thus enabled to properly handle the current measurement report (such as e.g. properly appraise its contents, expect the next measurement report at an appropriate time, etc.).

Further, it is exemplified that a normal measurement mode is to be entered, i.e. a change from the relaxed measurement mode to the normal measurement mode is to be performed. As the L1-RSRP measurement may be based on SSBs repeatedly sent from the gNB, this is again illustrated for the sake of completeness. Then, the UE decides on the change of the measurement mode such that the relaxed measurement mode is left, i.e. the normal measurement mode is entered. Thereafter, the UE prepares and issues a corresponding measurement report, which, in this example, is a L1-RSRP measurement report including an indication of the relaxed measurement mode being left (or the normal measurement mode being entered). Such indication corresponds to an information specifying that the normal measurement mode is applied for the current measurement report, which may be in the form of an indication and/or at least one characteristic of/for the normal measurement mode. Thereby, the gNB knows that the current measurement report from the UE will be based on the normal measurement mode (while the previous measurement report was based on the relaxed measurement mode), and the gNB is thus enabled to properly handle the current measurement report (such as e.g. properly appraise its contents, expect the next measurement report at an appropriate time, etc.).

It is to be noted that Figure 2 shows both processes/instances of entering and leaving the relaxation mode in a subsequent manner, but this is only for the sake of illustration. Namely, the processes/instances of entering and leaving the relaxation mode are inherently independent from each other such that each process can be performed alone/separately and in any order depending on the previously set measurement mode.

As is evident from the above, a communication entity such as a UE can make an indication or notification about a change in the applicable measurement mode to the network, i.e. a control entity such as a gNB. That is, the communication entity can inform the control entity as to whether a normal measurement mode or a relaxed measurement or a mixed measurement (including both normal and relaxed measurement) is applied for or from the current measurement report and/or the next measurement report or reports. For example, the UE informs the network when it is entering or exiting/leaving or is about to enter or exit/leave a relaxed measurement mode. To this end, the UE may utilize the measurement report (of/for L1 or L3 measurements) to notify this.

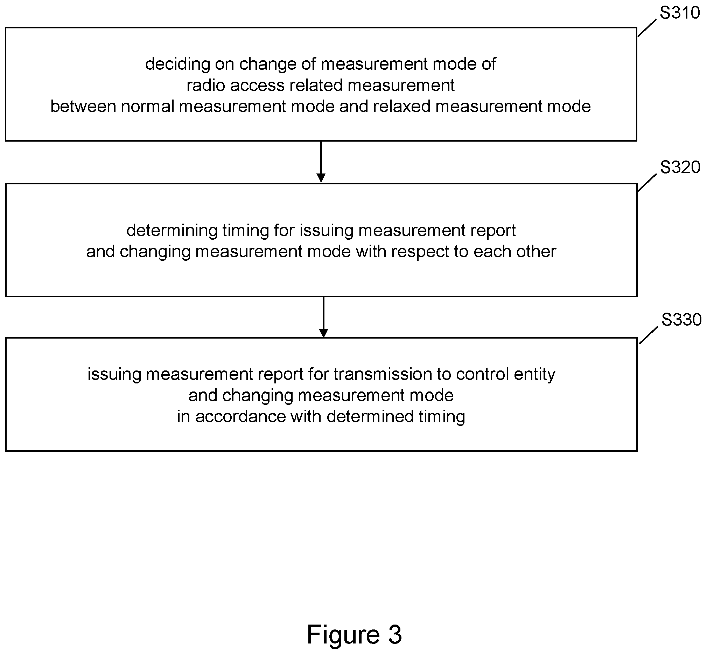

Figure 3 shows a flowchart illustrating an example of a method according to at least one exemplifying embodiment. The method of Figure 3 is a method of (or, stated in other words, operable or for use in/by) a communication entity, which may be referred to as or implemented as/by communication device, element or function, in a wireless communication system, such as e.g. a UE in a 5G/NR system. The communication entity, such as the UE, may perform this method in or as part of a measurement reporting period, event or operation.

As shown in Figure 3, the thus illustrated method comprises an operation (S310) of deciding on a change of a measurement mode of a radio access related measurement in the wireless communication system between a normal measurement mode and a relaxed measurement mode, an operation (S320) of determining a timing for issuing a measurement report and changing the measurement mode with respect to each other, and an operation (S330) of issuing a measurement report for transmission to a control entity controlling and/or serving the communication entity and changing the measurement mode in accordance with determined timing.

It is to be noted that the issuing operation of Figure 3 encompasses an operation of preparing the thus issued measurement report. The measurement report may but does not need to be prepared in accordance with the preparing operation as described in connection with Figure 1. That is, the measurement report may but does not need to include an information about the change of the measurement mode, specifying whether the normal measurement mode and/or the relaxed measurement mode is applied for or from the current measurement report and/or the next measurement report or reports.

According to at least one exemplifying embodiment, the relative timing of issuing the measurement report and changing the measurement mode may be such that the measurement report is issued when the measurement mode is changed. That is, the relative timing is determined such that the measurement report does not based on a mixture of the normal and relaxed measurement modes, but is (fully/completely) based on either the normal measurement mode or the relaxed measurement mode, even if the measurement mode is allowed to be changed in the middle of a measurement reporting period, event or operation.

According to at least one exemplifying embodiment, the relative timing of issuing the measurement report and changing the measurement mode may be such that issuing the measurement report is awaited and changing the measurement mode is effected upon issuance of the measurement report, or may be such that changing the measurement mode is effected upon verification that the change condition is fulfilled and issuing the measurement report is triggered by change of the measurement mode.

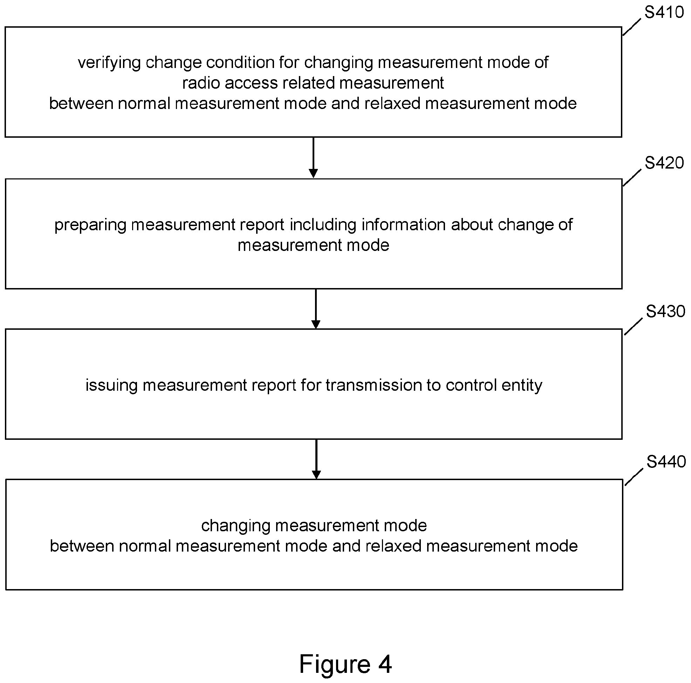

For further details regarding the deciding, issuing and changing operations, reference is made to the above description in conjunction with Figures 1 and 2. For further details regarding (options for) the relative timing of issuing the measurement report and changing the measurement mode, reference is made to the below description in conjunction with Figures 4 to 7.

Figure 4 shows a flowchart illustrating an example of a method according to at least one exemplifying embodiment. The method of Figure 4 is a method of (or, stated in other words, operable or for use in/by) a communication entity, which may be referred to as or implemented as/by communication device, element or function, in a wireless communication system, such as e.g. a UE in a 5G/NR system. The communication entity, such as the UE, may perform this method in or as part of a measurement reporting period, event or operation.

As shown in Figure 4, the thus illustrated method comprises an operation (S410) of verifying that a change condition for changing a measurement mode of a radio access related measurement in the wireless communication system between a normal measurement mode and a relaxed measurement mode, an operation (S420) of preparing a measurement report including an information about the change of the measurement mode, an operation (S430) of issuing the measurement report for transmission to a control entity controlling and/or serving the communication entity (which may be a control entity, which may be referred to as or implemented as/by communication control device, element or function, in the wireless communication system, such as e.g. a gNB in a 5G/NR system), and an operation (S440) of changing the measurement mode between the normal measurement mode and the relaxed measurement mode (according to the fulfilled change condition).

More specifically, according to at least one exemplifying embodiment, the verifying operation may be an operation of verifying that a change condition for changing from a currently applied measurement mode to another measurement mode is fulfilled (i.e. determining that the change condition is fulfilled), and the changing operation may be an operation of changing the measurement mode for applying the another measurement mode.

As is evident from Figure 4, the measurement report is issued when the measurement mode is changed. More specifically, issuing the measurement report is awaited (according to the predetermined or usual timing for issuing the measurement report in the current measurement reporting period, event or operation), and changing the measurement mode is effected upon issuance of the measurement report (i.e. after or immediately after the measurement report is used at the predetermined or usual timing).

In view of the methods of Figures 1 and 3, the method of Figure 4 may be regarded as a kind of combination/merging of these methods. If so, the changing of the measurement mode (immediately) after the issuance of the measurement report in the method of Figure 4 can be regarded as a specific example of variant of the relative timing which is determined and applied in the method of Figure 3.

Like in the method of Figure 1, the measurement report is prepared such that the measurement report includes an information about the change of the measurement mode, specifying whether the normal measurement mode and/or the relaxed measurement mode is applied for or from the current measurement report and/or the next measurement report or reports.

Although shown by separate blocks in Figure 4, a method according to at least one exemplifying embodiment may be such that preparing and issuing the measurement report may be accomplished in a single operation. Also, a method according to at least one exemplifying embodiment may also comprise emitting and/or transmitting the measurement report to the control entity. Also, the measurement report of Figure 4 may comprise one or more reports, parts, sections, etc., and the specifying information is prepared and/or included/inserted in any one of these.

For further details regarding the preparing, issuing and changing operations, as well as the information included in the measurement report, reference is made to the above description in conjunction with Figures 1 and 2.

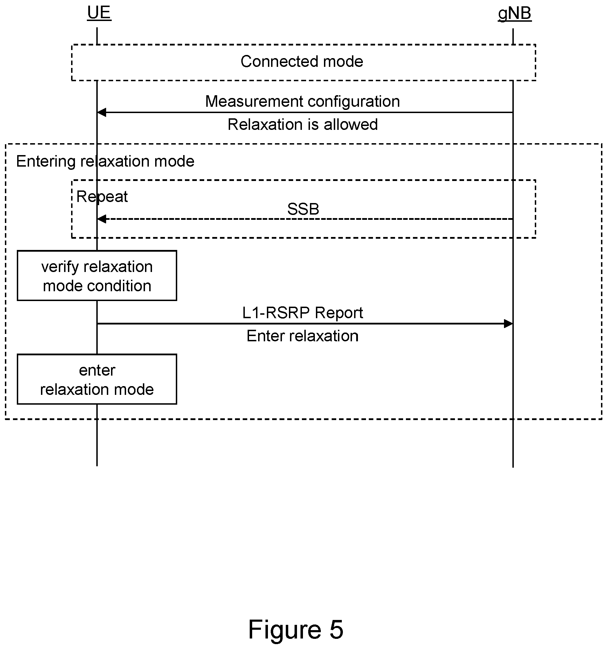

Figure 5 shows a sequence diagram illustrating an example of a process according to at least one exemplifying embodiment. The process of Figure 5 is exemplarily based on the non-limiting but merely illustrative example use case that the measurement refers to a L1-RSRP measurement which is (to be) performed by the depicted UE residing in the cell of the depicted gNB, while the process is equally applicable for any kind of measurement (such as e.g. one or more of RLM, BFD, RRM and RSRP), wherein the UE is configured to perform a method in accordance with the method of Figure 4.

As shown in Figure 5, it is assumed that the UE and the gNB have established and are operating in a connected mode, while the processes may be equally applicable in an idle/inactive mode of the UE. Further, it is assumed that the gNB sends to the UE a measurement configuration (which may configure that and possibly also how a L1-RSRP measurement is to be performed) and an indication of relaxation being allowed (which may mean or specify to the UE that the UE is allowed to make the final decision about measurement relaxation). Still further, it is assumed that the UE is currently set to applying a normal measurement mode (for the L1-RSRP measurement), i.e. the normal measurement mode is the currently applied measurement mode.

Based thereon, it is exemplified that a relaxed measurement mode (also referred to as relaxation mode) is to be entered, i.e. a change from the normal measurement mode to the relaxed measurement mode is to be performed. As the L1-RSRP measurement may be based on SSBs repeatedly sent from the gNB, this is illustrated for the sake of completeness.

Then, the UE verifies (i.e. determines) that a relaxation mode condition, i.e. a change condition for changing from the normal measurement mode to the relaxed measurement mode, is fulfilled. Thereupon, the UE does not directly enter the relaxed measurement mode, but still waits for entering the relaxed measurement mode. More specifically, the UE awaits (preparation and) issuance of the measurement report (according to the predetermined or usual timing for issuing the measurement report in the current measurement reporting period, event or operation). In this example, the measurement report is a L1-RSRP measurement report including an indication of the relaxed measurement mode being (to be) entered. Such indication corresponds to an information specifying that the relaxed measurement mode is applied for the next measurement report, which may be in the form of an indication and/or at least one characteristic of/for the relaxed measurement mode. Thereby, the gNB knows that the next measurement report from the UE will be based on the relaxed measurement mode (while the current measurement report is still based on the normal measurement mode), and the gNB is thus enabled to properly handle the next measurement report (such as e.g. properly appraise its contents, expect the next measurement report at an appropriate time, etc.). Only thereafter, the UE changes the measurement mode to the relaxed measurement mode, i.e. enters the relaxed measurement mode, such that relaxed measurements are subsequently applied.

That is, the UE changes or is only allowed to change the measurement mode at the time the measurement report is sent.

It is to be noted that Figure 5 shows the case of changing from the normal measurement mode to the relaxed measurement mode, but the thus described method is equally applicable for changing from the relaxed measurement mode to the normal measurement mode (when it is assumed that the UE is at the start set to applying the relaxed measurement mode (for the L1-RSRP measurement), i.e. the relaxed measurement mode is the currently applied measurement mode). In this case, any references to entering the relaxed measurement mode in Figure 5 and its description is to be replaced by a reference to exiting/leaving the relaxed measurement mode or entering the normal measurement mode.

Accordingly, in view of Figures 4 and 5, the change of the measurement mode is postponed until after the issuance of the measurement report, e.g. until the end of the measurement reporting period, event or operation (despite the fact that the change condition is already (verified/determined to be) fulfilled earlier. That is, the measurement mode is changed only after issuance of the measurement report. Thereby, the measurement/s (in this example, the L1 measurement/s such as the L1-RSRP measurement/s, but in other examples any applied measurement/s such as L3 measurements, e.g. RRM/RLM/BFD measurement/s) in the measurement reporting period, event or operation is/are still performed in the currently applied measurement mode before change (in the present example, the normal measurement mode), and the measurement report and its contents are thus still (fully/completely) based thereon (in the present example, the normal measurement mode). Thus, it is avoided that a mixture of the normal and relaxed measurement modes is applied for the measurement report.

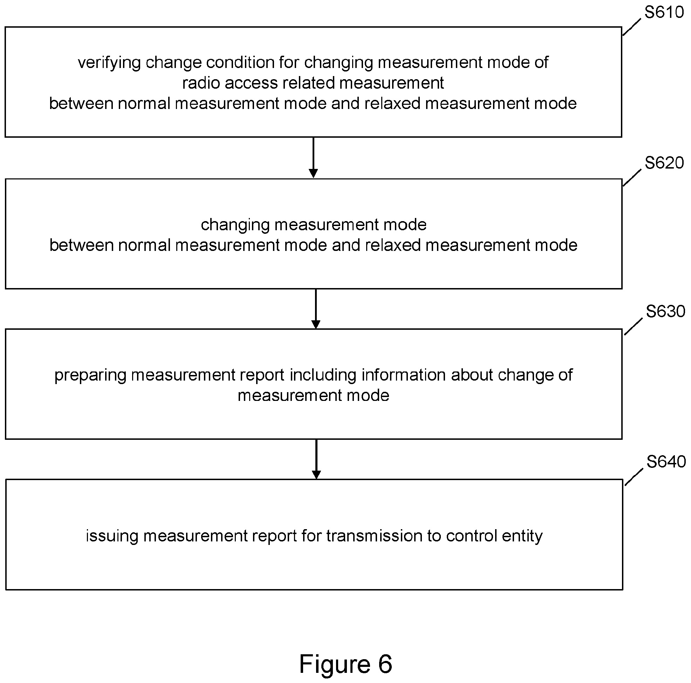

Figure 6 shows a flowchart illustrating an example of a method according to at least one exemplifying embodiment. The method of Figure 6 is a method of (or, stated in other words, operable or for use in/by) a communication entity, which may be referred to as or implemented as/by communication device, element or function, in a wireless communication system, such as e.g. a UE in a 5G/NR system. The communication entity, such as the UE, may perform this method in or as part of a measurement reporting period, event or operation.

As shown in Figure 6, the thus illustrated method comprises an operation (S610) of verifying that a change condition for changing a measurement mode of a radio access related measurement in the wireless communication system between a normal measurement mode and a relaxed measurement mode, an operation (S620) of changing the measurement mode between the normal measurement mode and the relaxed measurement mode (according to the fulfilled change condition), an operation (S630) of preparing a measurement report including an information about the change of the measurement mode, and an operation (S640) of issuing the measurement report for transmission to a control entity controlling and/or serving the communication entity (which may be a control entity, which may be referred to as or implemented as/by communication control device, element or function, in the wireless communication system, such as e.g. a gNB in a 5G/NR system).

More specifically, according to at least one exemplifying embodiment, the verifying operation may be an operation of verifying that a change condition for changing from a currently applied measurement mode to another measurement mode is fulfilled (i.e. determining that the change condition is fulfilled), and the changing operation may be an operation of changing the measurement mode for applying the another measurement mode.

As is evident from Figure 6, the measurement report is issued when the measurement mode is changed. More specifically, changing the measurement mode is effected upon verification that the change condition is fulfilled (i.e. after or immediately after the change condition is verified/determined to be fulfilled), and issuing the measurement report is triggered by change of the measurement mode.

In view of the methods of Figures 1 and 3, the method of Figure 6 may be regarded as a kind of combination/merging of these methods. If so, the issuing of the measurement report (immediately) after the changing of the measurement mode in the method of Figure 6 can be regarded as a specific example of variant of the relative timing which is determined and applied in the method of Figure 3.

Like in the method of Figure 1, the measurement report is prepared such that the measurement report includes an information about the change of the measurement mode, specifying whether the normal measurement mode and/or the relaxed measurement mode is applied for or from the current measurement report and/or the next measurement report or reports.

Although shown by separate blocks in Figure 5, a method according to at least one exemplifying embodiment may be such that preparing and issuing the measurement report may be accomplished in a single operation. Also, a method according to at least one exemplifying embodiment may also comprise emitting and/or transmitting the measurement report to the control entity. Also, the measurement report of Figure 6 may comprise one or more reports, parts, sections, etc., and the specifying information is prepared and/or included/inserted in any one of these.

For further details regarding the preparing, issuing and changing operations, as well as the information included in the measurement report, reference is made to the above description in conjunction with Figures 1 and 2.

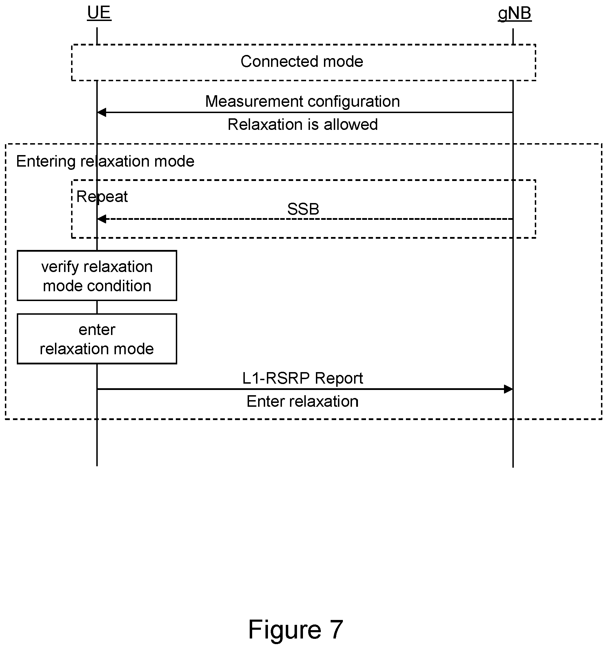

Figure 7 shows a sequence diagram illustrating an example of a process according to at least one exemplifying embodiment. The process of Figure 7 is exemplarily based on the non-limiting but merely illustrative example use case that the measurement refers to a L1-RSRP measurement which is (to be) performed by the depicted UE residing in the cell of the depicted gNB, while the process is equally applicable for any kind of measurement (such as e.g. one or more of RLM, BFD, RRM and RSRP), wherein the UE is configured to perform a method in accordance with the method of Figure 6.

As shown in Figure 7, it is assumed that the UE and the gNB have established and are operating in a connected mode, while the processes may be equally applicable in an idle/inactive mode of the UE. Further, it is assumed that the gNB sends to the UE a measurement configuration (which may configure that and possibly also how a L1-RSRP measurement is to be performed) and an indication of relaxation being allowed (which may mean or specify to the UE that the UE is allowed to make the final decision about measurement relaxation). Still further, it is assumed that the UE is currently set to applying a normal measurement mode (for the L1-RSRP measurement), i.e. the normal measurement mode is the currently applied measurement mode.

Based thereon, it is exemplified that a relaxed measurement mode (also referred to as relaxation mode) is to be entered, i.e. a change from the normal measurement mode to the relaxed measurement mode is to be performed. As the L1-RSRP measurement may be based on SSBs repeatedly sent from the gNB, this is illustrated for the sake of completeness.

Then, the UE verifies (i.e. determines) that a relaxation mode condition, i.e. a change condition for changing from the normal measurement mode to the relaxed measurement mode, is fulfilled. Thereupon, the UE directly enters the relaxed measurement mode. Thereafter, the UE awaits (preparation and) issuance of the measurement report which, in this example, is a L1-RSRP measurement report including an indication of the relaxed measurement mode being (to be) entered. Such indication corresponds to an information specifying that the relaxed measurement mode is applied for the next measurement report, which may be in the form of an indication and/or at least one characteristic of/for the relaxed measurement mode. Thereby, the gNB knows that the next measurement report from the UE will be based on the relaxed measurement mode (while the current measurement report is still based on the normal measurement mode), and the gNB is thus enabled to properly handle the next measurement report (such as e.g. properly appraise its contents, expect the next measurement report at an appropriate time, etc.). Only thereafter, the UE changes the measurement mode to the relaxed measurement mode, i.e. enters the relaxed measurement mode, such that relaxed measurements are subsequently applied.

That is, the measurement report is triggered (to be prepared and/or issued) at the moment when the UE changes the measurement mode.

It is to be noted that Figure 7 shows the case of changing from the normal measurement mode to the relaxed measurement mode, but the thus described method is equally applicable for changing from the relaxed measurement mode to the normal measurement mode (when it is assumed that the UE is at the start set to applying the relaxed measurement mode (for the L1-RSRP measurement), i.e. the relaxed measurement mode is the currently applied measurement mode). In this case, any references to entering the relaxed measurement mode in Figure 7 and its description is to be replaced by a reference to exiting/leaving the relaxed measurement mode or entering the normal measurement mode.

Accordingly, in view of Figures 6 and 7, the change of the measurement mode is directly/immediately effected when the change condition is (verified/determined) fulfilled, and the measurement report is triggered (to be (prepared and/or) issued) by the change of the measurement mode. The measurement report is based on the measurement results or samples that have been collected until that moment based on one or more measurements performed by the old measurement mode before change (potentially since the previous measurement report), while one or more measurements performed after that moment will be based on the new measurement mode after change. Thereby, the measurement/s (in this example, the L1 measurement/s such as the L1-RSRP measurement/s, but in other examples any applied measurement/s such as L3 measurements, e.g. RRM/RLM/BFD measurement/s) in the measurement reporting period, event or operation is/are still performed in the currently applied measurement mode before change (in the present example, the normal measurement mode), and the measurement report and its contents are thus still (fully/completely) based thereon (in the present example, the normal measurement mode). Thus, it is avoided that a mixture of the normal and relaxed measurement modes is applied for the measurement report.

As is evident from the above, measurement reports for different measurement modes can be separated from each other. That is, it can be achieved that a measurement report is (fully/completely) based on a single measurement mode, i.e. one or more measurements in the single measurement mode. Hence, a single measurement report is only containing measurement results or samples from either normal measurement or relaxed measurement. This is basically achieved in that the measurement report is issued when the measurement mode is changed, i.e. the normal or relaxed measurement mode is entered.

While the foregoing description mainly focuses on the functionality or operability of the communication entity, such as the UE, it is to be noted that a corresponding functionality or operability of the control entity, such as the gNB, is also encompassed according to exemplifying embodiments of the present disclosure. As the communication entity, such as the UE, and the control entity, such as the gNB, represent counterpart entities which mutually communicate with each other, the actions of one of them naturally act on the other one accordingly, and the present disclosure encompasses corresponding actions at both entities.

Referring to Figures 1 to 7, when a measurement report is issued at/by the UE (and is then transmitted to the gNB), the gNB (receives and) obtains this measurement request. Then, the gNB reads and/or analyzes its contents, and uses the thus read and/or analyzed contents e.g. for internal and/or external control operations. For example, the gNB may use the measurement results or samples in the measurement report for corresponding control operations, may use the information in the measurement report (i.e. information specifying which measurement mode or modes is or are used by the UE in which measurement report or reports) to adapt its operation for expecting, receiving, reading, analyzing and/or using the measurement report/s and its/their contents, or the like. Specifically, according to exemplifying embodiments of the present disclosure, the gNB is configured to utilize the specifying information on measurement mode changes in a measurement report, to utilize the fact or knowledge that a single measurement report is only based on a single measurement mode, or the like.

According to exemplifying embodiments of the present disclosure, any signaling between the communication entity, such as the UE, and the control entity, such as the gNB, may be realized using RRC signaling.

By virtue of exemplifying embodiments of the present disclosure, as evident from the above, measurement reporting with changing measurement modes in a wireless communication system, i.e. measurement reporting when a measurement mode of a radio access related measurement changes, can be enabled/realized.

Hence, in a wireless communication system, the network can obtain clear visibility of the measurement mode (currently or subsequently) applied by the UE such that the network may know whether a received measurement report is based on normal or relaxed measurements, how the contents of a received measurement report is to be handled or appraised, when the next measurement report is to be expected, or the like. That is, appropriate and/or efficient measurement reporting can be handled with changing measurement modes, irrespective of the kind and/or number of available measurement modes, the kind or type of measurements being performed un such modes, the kind or type of measurement report, or the like.

Benefits can thus be achieved in a wireless communication system supporting different measurement modes, especially different modes of/for UE measurements. This does not only but particular apply in the case that the UE is allowed to make the decision about measurement relaxation (completely or partly) independently, i.e. make the final decision (with or without consideration of a preceding partial or pre-decision by the network such as the gNB), and/or the measurement mode is allowed to be changed in the middle of a measurement reporting period, event or operation.

As one particular aspect, the network may (better) know when to expect the next measurement report, when the evaluation or measurement interval/period is extended for measurement relaxation and, thus, the UE report more rarely. As another particular aspect, the UE will not mix measurements from different measurement modes by clearly defining that the UE may only enter/exit a relaxed measurement mode between measurement reporting periods, events or operations or between measurements being reported in a single measurement report.

Accordingly, exemplifying embodiments of the present disclosure may increase predictability of UE actions to the network, such as the gNB, thus enabling a better network performance, in view of the UE's ability of (finally deciding on) changing the measurement mode.

Various aspects of exemplifying embodiments of the present disclosure are favorably applicable to 3GPP standardization e.g. in terms of the Radio Resource Control (RRC) protocol and or radio resource management, as defined in 3GPP TS 38.331 and 3GPP TS 38.133, respectively.

The above-described methods, procedures and functions may be implemented by respective functional elements, entities, modules, units, processors, circuitry/circuitries, or the like, as described below.

While in the foregoing exemplifying embodiments of the present invention are described mainly with reference to methods, procedures and functions, corresponding exemplifying embodiments of the present invention also cover respective apparatuses, entities, modules, units, network nodes and/or systems, including both software and/or hardware thereof.

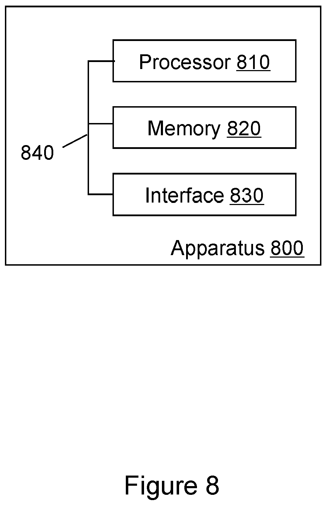

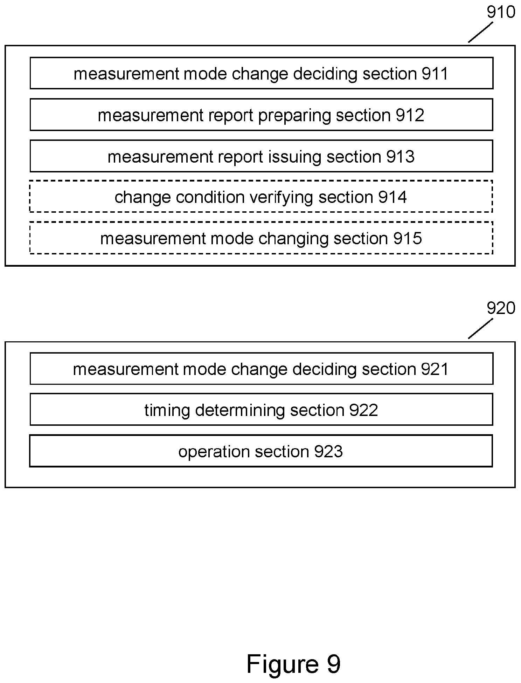

Respective exemplifying embodiments of the present invention are described below referring to Figures 8 and 9, while for the sake of brevity reference is made to the detailed description of respective corresponding configurations/setups, schemes, processes, sequences, methods as well as functionalities, principles and operations according to Figures 1 to 7.

In Figures 8 and 9, the blocks are basically configured to perform respective methods, procedures and/or functions as described above. The entirety of blocks are basically configured to perform the methods, procedures and/or functions as described above, respectively. With respect to Figures 8 and 9, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 8 and 9, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

Figure 8 shows a schematic diagram illustrating an example of a (constructional) structure of apparatuses according to at least one exemplifying embodiment. Herein, an apparatus can represent a physical entity, i.e. a structural device implementing a specific network element, entity or function or the functionality thereof as such.

As indicated in Figure 8, according to at least one exemplifying embodiment, an apparatus 800 may comprise at least one processor 810 and at least one memory 820 (and possibly also at least one interface 830), which may be operationally connected or coupled, for example by a bus 840 or the like, respectively.

The processor 810 and/or the interface 830 of the apparatus 800 may also include a modem or the like to facilitate communication over a (hardwire or wireless) link, respectively. The interface 830 of the apparatus 800 may include a suitable transmitter, receiver or transceiver connected or coupled to one or more antennas, antenna units, such as antenna arrays or communication facilities or means for (hardwire or wireless) communications with the linked, coupled or connected device(s), respectively. The interface 830 of the apparatus 800 is generally configured to communicate with at least one other apparatus, device, node or entity (in particular, the interface thereof).

The memory 820 of the apparatus 800 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with the exemplifying embodiments of the present invention. Further, the memory 820 of the apparatus 800 may (comprise a database to) store any data, information, or the like, which is used in the operation of the apparatus.

In general terms, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated apparatus 800 is suitable for use in practicing one or more of the exemplifying embodiments, as described herein.

When in the subsequent description it is stated that the processor (or some other means) is configured to perform some function, this is to be construed to be equivalent to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one exemplifying embodiment, the thus illustrated apparatus 800 may represent or realize/embody a (part of a) communication entity in a wireless communication system or an apparatus of/for such communication entity. Hence, the apparatus 800 may be configured to perform a procedure and/or exhibit a functionality and/or implement a mechanism, as described (for a communication entity, such as an UE) in any one of Figures 1 to 7.

Accordingly, the apparatus 800 may be caused or the apparatus 800 or its at least one processor 810 (possibly together with computer program code stored in its at least one memory 820), in its most basic form, is configured to decide on a change of a measurement mode of a radio access related measurement in the wireless communication system between a normal measurement mode and a relaxed measurement mode, prepare a measurement report including an information about the change of the measurement mode, said information specifying whether the normal measurement mode and/or the relaxed measurement mode is applied for or from the current measurement report and/or the next measurement report or reports, and issue the measurement report for transmission to a control entity controlling and/or serving the communication entity

As mentioned above, an apparatus according to at least one exemplifying embodiment may be structured by comprising respective units, means, circuitry/circuitries or the like for performing corresponding operations, procedures and/or functions. For example, such units, means, circuitry/circuitries or the like may be implemented/realized on the basis of an apparatus structure, as exemplified in Figure 8, i.e. by one or more processors 810, one or more memories 820, one or more interfaces 830, or any combination thereof.

Figure 9 shows a schematic diagram illustrating an example of a (functional) structure of apparatuses according to at least one exemplifying embodiment.

As shown in Figure 9, an apparatus 910 according to at least one exemplifying embodiment may represent or realize/embody a (part of a) communication entity in a wireless communication system or an apparatus of/for such communication entity. Hence, the apparatus 910 may be configured to perform a procedure and/or exhibit a functionality and/or implement a mechanism, as described (for a communication entity, such as an UE) in any one of Figures 1 to 7.

Such apparatus 910 may comprise (at least) deciding unit/means/circuitry denoted by measurement mode change deciding section 911, which represents any implementation for (or configured to) deciding (decide) on a change of a measurement mode of a radio access related measurement in the wireless communication system between a normal measurement mode and a relaxed measurement mode, preparing unit/means/circuitry denoted by measurement mode preparing section 912, which represents any implementation for (or configured to) preparing (prepare) a measurement report including an information about the change of the measurement mode, said information specifying whether the normal measurement mode and/or the relaxed measurement mode is applied for or from the current measurement report and/or the next measurement report or reports, and issuing unit/means/circuitry denoted by measurement report issuing section 913, which represents any implementation for (or configured to) issuing (issue) the measurement report for transmission to a control entity controlling and/or serving the communication entity.

As indicated by dashed boxes, such apparatus 910 may also comprise verifying unit/means/circuitry denoted by change condition verifying section 914, which represents any implementation for (or configured to) verifying (verify) that a change condition for changing from a currently applied measurement mode to another measurement mode is fulfilled, and changing unit/means/circuitry denoted by measurement mode changing section 915, which represents any implementation for (or configured to) changing (change) the measurement mode for applying the another measurement mode.

Additionally or alternatively, as shown in Figure 9, an apparatus 920 according to at least one exemplifying embodiment may represent or realize/embody a (part of a) communication entity in a wireless communication system or an apparatus of/for such communication entity. Hence, the apparatus 920 may be configured to perform a procedure and/or exhibit a functionality and/or implement a mechanism, as described (for a communication entity, such as an UE) in Figure 3.

Such apparatus 920 may comprise (at least) deciding unit/means/circuitry denoted by measurement mode change deciding section 921, which represents any implementation for (or configured to) deciding (decide) on a change of a measurement mode of a radio access related measurement in the wireless communication system between a normal measurement mode and a relaxed measurement mode, determining unit/means/circuitry denoted by timing determining section 922, which represents any implementation for (or configured to) determining (determine) a timing for issuing a measurement report and changing the measurement mode with respect to each other, and operation unit/means/circuitry denoted by operation section 923, which represents any implementation for (or configured to) issuing (issue) a measurement report for transmission to a control entity controlling and/or serving the communication entity and changing (change) the measurement mode in accordance with determined timing.

For further details regarding the operability/functionality of the apparatuses (or units/means thereof) according to exemplifying embodiments, reference is made to the above description in connection with any one of Figures 1 to 7, respectively.

According to exemplifying embodiments of the present disclosure, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to exemplifying embodiments of the present disclosure, a system may comprise any conceivable combination of any depicted or described apparatuses and other network elements or functional entities, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of exemplifying embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of exemplifying embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea of the present disclosure. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling/realizing measurement reporting with changing measurement modes in a wireless communication system. Such measures exemplarily comprise that a communication entity in a wireless communication system decides on a change of a measurement mode of a radio access related measurement in the wireless communication system between a normal measurement mode and a relaxed measurement mode, prepares a measurement report including an information about the change of the measurement mode, said information specifying whether the normal measurement mode and/or the relaxed measurement mode is applied for or from the current measurement report and/or the next measurement report or reports, and issues the measurement report for transmission to a control entity controlling and/or serving the communication entity.

Even though the present disclosure is described above with reference to the examples according to the accompanying drawings, it is to be understood that the present disclosure is not restricted thereto. Rather, it is apparent to those skilled in the art that the present disclosure can be modified in many ways without departing from the scope of the inventive idea as disclosed herein.

### List of acronyms and abbreviations

- 3GPP: 3rd Generation Partnership Project
- 5G: 5^{th} Generation
- BFD: Beam Failure Detection
- gNB: Next generation NodeB (5G/NR base station)
- L1-RSRP: Layer 1 Reference Signal Received Power
- NR: New Radio
- RLM: Radio Link Monitoring
- RRC: Radio Resource Control
- RRM: Radio Resource Management
- SSB: Synchronization Signal Block
- UE: User Equipment

## Claims

1. A method of a communication entity (910) in a wireless communication system, comprising:
deciding (S110) on a change of a measurement mode of a radio access related measurement in the wireless communication system between a normal measurement mode and a relaxed measurement mode, wherein said relaxed measurement mode, as compared with said normal measurement mode, provides relaxation for said communication entity in performing said radio access related measurement for enabling power saving at said communication entity,
preparing (S120) a measurement report including an information about the change of the measurement mode, said information specifying whether the normal measurement mode and/or the relaxed measurement mode is applied for or from the current measurement report and/or the next measurement report or reports, and
issuing (S130) the measurement report for transmission to a control entity controlling and/or serving the communication entity.

2. The method according to claim 1, wherein said information comprises at least one of:
an indication of the applied measurement mode or modes, and
at least one characteristic of the applied measurement mode or modes.

3. The method according to claim 2, wherein
the indication indicates that the normal measurement mode, the relaxed measurement mode or a mixture of the normal and relaxed measurement modes is applied for a respective measurement report, and/or
the characteristics comprise one or more of a measurement or evaluation period in the normal measurement mode, a measurement or evaluation period in the relaxed measurement mode, a scaling or relaxation factor for extending the measurement or evaluation period in the relaxed measurement mode as compared with the normal measurement mode, and a relation between one or more measurement properties between the relaxed measurement mode and the normal measurement mode.

4. The method according to any one of claims 1 to 3, wherein deciding (S110) comprises
verifying (S610) that a change condition for changing from a currently applied measurement mode to another measurement mode is fulfilled, and
changing (S620) the measurement mode for applying the another measurement mode.

5. The method according to claim 4, wherein
the measurement report is issued when the measurement mode is changed.

6. The method according to claim 4 or 5, wherein
issuing (S130, S430) the measurement report is awaited, and changing (S440) the measurement mode is effected upon issuance of the measurement report, or
changing (S620) the measurement mode is effected upon verification that the change condition is fulfilled, and issuing (S640) the measurement report is triggered by change of the measurement mode.

7. The method according to claim 5 or 6, wherein
the issued measurement report is based on application of the currently applied measurement mode before change of the measurement mode, and/or
the issued measurement report includes an information specifying that the another measurement mode after change of the measurement mode is applied for or from the next measurement report or reports.

8. The method according to any one of claims 1 to 7, wherein
the radio access related measurement concerns or comprises measurement of at least one of radio link monitoring, beam failure detection, radio resource management and reference signal received power.

9. The method according to any one of claims 1 to 8, wherein
preparing (S120) the measurement report comprises including the information in the measurement report which is an existing measurement report or comprises generating a measurement report and including the information in the generated measurement report, and/or
the measurement report is transmitted to the control entity by way of radio resource signaling, and/or
the measurement report is a measurement report relating to a current measurement reporting period or event.

10. The method according to any one of claims 1 to 9, wherein
the communication entity is a communication element or function, such as a user equipment, and/or
the control entity is a control element or function, such as a base station or Node B, and/or
the wireless communication system is based on a 3GPP standard, such as a 5G or NR system.

11. An apparatus of a communication entity (910) in a wireless communication system, comprising:
means for deciding (911) on a change of a measurement mode of a radio access related measurement in the wireless communication system between a normal measurement mode and a relaxed measurement mode, wherein said relaxed measurement mode, as compared with said normal measurement mode, provides relaxation for said communication entity in performing said radio access related measurement for enabling power saving at said communication entity,
means for preparing (912) a measurement report including an information about the change of the measurement mode, said information specifying whether the normal measurement mode and/or the relaxed measurement mode is applied for or from the current measurement report and/or the next measurement report or reports, and
means for issuing (913) the measurement report for transmission to a control entity controlling and/or serving the communication entity.

12. The apparatus (910) according to claim 11, wherein said information comprises at least one of:
an indication of the applied measurement mode or modes, and
at least one characteristic of the applied measurement mode or modes.

13. The apparatus (910) according to claim 12, wherein
the indication indicates that the normal measurement mode, the relaxed measurement mode or a mixture of the normal and relaxed measurement modes is applied for a respective measurement report, and/or
the characteristics comprise one or more of a measurement or evaluation period in the normal measurement mode, a measurement or evaluation period in the relaxed measurement mode, a scaling or relaxation factor for extending the measurement or evaluation period in the relaxed measurement mode as compared with the normal measurement mode, and a relation between one or more measurement properties between the relaxed measurement mode and the normal measurement mode.

14. The apparatus (910) according to any one of claims 11 to 13, wherein deciding comprises
verifying that a change condition for changing from a currently applied measurement mode to another measurement mode is fulfilled, and
changing the measurement mode for applying the another measurement mode.

15. The apparatus (910) according to claim 14, wherein
the measurement report is issued when the measurement mode is changed.

16. The apparatus (910) according to claim 14 or 15, wherein
issuing the measurement report is awaited, and changing the measurement mode is effected upon issuance of the measurement report, or
changing the measurement mode is effected upon verification that the change condition is fulfilled, and issuing the measurement report is triggered by change of the measurement mode.

17. The apparatus (910) according to claim 15 or 16, wherein
the issued measurement report is based on application of the currently applied measurement mode before change of the measurement mode, and/or
the issued measurement report includes an information specifying that the another measurement mode after change of the measurement mode is applied for or from the next measurement report or reports.

18. The apparatus (910) according to any one of claims 11 to 17, wherein
the radio access related measurement concerns or comprises measurement of at least one of radio link monitoring, beam failure detection, radio resource management and reference signal received power.

19. The apparatus (910) according to any one of claims 11 to 18, wherein
preparing the measurement report comprises including the information in the measurement report which is an existing measurement report or comprises generating a measurement report and including the information in the generated measurement report, and/or
the measurement report is transmitted to the control entity by way of radio resource signaling, and/or
the measurement report is a measurement report relating to a current measurement reporting period or event.

20. The apparatus (910) according to any one of claims 11 to 19, wherein
the communication entity is a communication element or function, such as a user equipment, and/or
the control entity is a control element or function, such as a base station or Node B, and/or
the wireless communication system is based on a 3GPP standard, such as a 5G or NR system.

21. A computer program product comprising computer program code which, when the computer program code is executed on a computer, is configured to cause the computer to carry out the method according to any one of claims 1 to 10.

## Patentansprüche

1. Verfahren einer Kommunikationsentität (910) in einem drahtlosen Kommunikationssystem, das Folgendes umfasst:
Beschließen (S110) einer Änderung eines Messmodus einer einen Funkzugang betreffenden Messung im drahtlosen Kommunikationssystem zwischen einem normalen Messmodus und einem entspannten Messmodus, wobei der entspannte Messmodus im Vergleich zum normalen Messmodus beim Durchführen der einen Funkzugang betreffenden Messung zum Ermöglichen einer Energieeinsparung an der Kommunikationsentität eine Entspannung für die Kommunikationsentität bereitstellt,
Erstellen (S120) eines Messberichts, der eine Information über die Änderung des Messmodus beinhaltet, wobei die Information spezifiziert, ob für den oder ab dem aktuellen Messbericht und/oder den nächsten Messbericht oder die nächsten Messberichte der normale Messmodus und/oder der entspannte Messmodus angewandt wird, und
Ausgeben (S130) des Messberichts zur Übertragung zu einer Steuerentität, die die Kommunikationsentität steuert und/oder bedient.

2. Verfahren nach Anspruch 1, wobei die Information mindestens eines von Folgendem umfasst:
eine Anzeige des angewandten Messmodus oder der angewandten Messmodi, und
mindestens ein Charakteristikum des angewandten Messmodus oder der angewandten Messmodi.

3. Verfahren nach Anspruch 2, wobei
die Anzeige anzeigt, dass für einen jeweiligen Messbericht der normale Messmodus, der entspannte Messmodus oder eine Mischung aus dem normalen und dem entspannten Messmodus angewandt wird, und/oder
die Charakteristika eines oder mehreres von einer Mess- oder Beurteilungsperiode im normalen Messmodus, einer Mess- oder Beurteilungsperiode im entspannten Messmodus, eines Skalierungs- oder Entspannungsfaktors zum Verlängern der Mess- oder Beurteilungsperiode im entspannten Messmodus im Vergleich zum normalen Messmodus und einer Beziehung zwischen einer oder mehreren Messeigenschaften zwischen dem entspannten Messmodus und dem normalen Messmodus umfassen.

4. Verfahren nach einem der Ansprüche 1 bis 3, wobei das Beschließen (S110) Folgendes umfasst
Verifizieren (S610), dass eine Änderungsbedingung zum Ändern eines derzeit angewandten Messmodus in einen anderen Messmodus erfüllt ist, und
Ändern (S620) des Messmodus zum Anwenden des anderen Messmodus.

5. Verfahren nach Anspruch 4, wobei
der Messbericht ausgegeben wird, wenn der Messmodus geändert wird.

6. Verfahren nach Anspruch 4 oder 5, wobei
das Ausgeben (S130, S430) des Messberichts erwartet wird und das Ändern (S440) des Messmodus nach Ausgabe des Messberichts bewirkt wird, oder
das Ändern (S620) des Messmodus nach der Verifizierung, dass die Änderungsbedingung erfüllt ist, bewirkt wird und das Ausgeben (S640) des Messberichts durch die Änderung des Messmodus ausgelöst wird.

7. Verfahren nach Anspruch 5 oder 6, wobei
der ausgegebene Messbericht auf der Anwendung des derzeit angewandten Messmodus vor Änderung des Messmodus basiert, und/oder
der ausgegebene Messbericht eine Information beinhaltet, die spezifiziert, dass der andere Messmodus nach Änderung des Messmodus für den oder ab dem nächsten Messbericht bzw. den nächsten Messberichten angewandt wird.

8. Verfahren nach einem der Ansprüche 1 bis 7, wobei
die einen Funkzugang betreffende Messung eine Messung von mindestens einem einer Funkverbindungsüberwachung, einer Strahlfehlerdetektion, einer Funkressourcenverwaltung und einer Referenzsignalempfangsleistung anbelangt oder umfasst.

9. Verfahren nach einem der Ansprüche 1 bis 8, wobei
das Erstellen (S120) des Messberichts das Einbinden der Information in den Messbericht, der ein bestehender Messbericht ist, umfasst oder das Erzeugen eines Messberichts und Einbinden der Information in den erzeugten Messbericht umfasst, und/oder
der Messbericht über eine Funkressourcensignalisierung zur Steuerentität übertragen wird, und/oder
der Messbericht ein Messbericht ist, der eine aktuelle Messberichterstattungsperiode oder ein aktuelles Messberichterstattungsereignis betrifft.

10. Verfahren nach einem der Ansprüche 1 bis 9, wobei
die Kommunikationsentität ein Kommunikationselement oder eine Kommunikationsfunktion ist, wie etwa eine Teilnehmereinrichtung, und/oder
die Steuerentität ein Steuerelement oder eine Steuerfunktion ist, wie etwa eine Basisstation oder ein Node B, und/oder
das drahtlose Kommunikationssystem auf einem 3GPP-Standard basiert, wie etwa einem 5G- oder einem NR-System.

11. Vorrichtung einer Kommunikationsentität (910) in einem drahtlosen Kommunikationssystem, die Folgendes umfasst:
Mittel zum Beschließen (911) einer Änderung eines Messmodus einer einen Funkzugang betreffenden Messung im drahtlosen Kommunikationssystem zwischen einem normalen Messmodus und einem entspannten Messmodus, wobei der entspannte Messmodus im Vergleich zum normalen Messmodus beim Durchführen der einen Funkzugang betreffenden Messung zum Ermöglichen einer Energieeinsparung an der Kommunikationsentität eine Entspannung für die Kommunikationsentität bereitstellt,
Mittel zum Erstellen (912) eines Messberichts, der eine Information über die Änderung des Messmodus beinhaltet, wobei die Information spezifiziert, ob für den oder ab dem aktuellen Messbericht und/oder den nächsten Messbericht oder die nächsten Messberichte der normale Messmodus und/oder der entspannte Messmodus angewandt wird, und
Mittel zum Ausgeben (913) des Messberichts zur Übertragung zu einer Steuerentität, die die Kommunikationsentität steuert und/oder bedient.

12. Vorrichtung (910) nach Anspruch 11, wobei die Information mindestens eines von Folgendem umfasst:
eine Anzeige des angewandten Messmodus oder der angewandten Messmodi, und
mindestens ein Charakteristikum des angewandten Messmodus oder der angewandten Messmodi.

13. Vorrichtung (910) nach Anspruch 12, wobei
die Anzeige anzeigt, dass für einen jeweiligen Messbericht der normale Messmodus, der entspannte Messmodus oder eine Mischung aus dem normalen und dem entspannten Messmodus angewandt wird, und/oder
die Charakteristika eines oder mehreres von einer Mess- oder Beurteilungsperiode im normalen Messmodus, einer Mess- oder Beurteilungsperiode im entspannten Messmodus, eines Skalierungs- oder Entspannungsfaktors zum Verlängern der Mess- oder Beurteilungsperiode im entspannten Messmodus im Vergleich zum normalen Messmodus und einer Beziehung zwischen einer oder mehreren Messeigenschaften zwischen dem entspannten Messmodus und dem normalen Messmodus umfassen.

14. Vorrichtung (910) nach einem der Ansprüche 11 bis 13, wobei das Beschließen Folgendes umfasst
Verifizieren, dass eine Änderungsbedingung zum Ändern eines derzeit angewandten Messmodus in einen anderen Messmodus erfüllt ist, und
Ändern des Messmodus zum Anwenden des anderen Messmodus.

15. Vorrichtung (910) nach Anspruch 14, wobei
der Messbericht ausgegeben wird, wenn der Messmodus geändert wird.

16. Vorrichtung (910) nach Anspruch 14 oder 15, wobei
das Ausgeben des Messberichts erwartet wird und das Ändern des Messmodus nach Ausgabe des Messberichts bewirkt wird, oder
das Ändern des Messmodus nach der Verifizierung, dass die Änderungsbedingung erfüllt ist, bewirkt wird und das Ausgeben des Messberichts durch die Änderung des Messmodus ausgelöst wird.

17. Vorrichtung (910) nach Anspruch 15 oder 16, wobei
der ausgegebene Messbericht auf der Anwendung des derzeit angewandten Messmodus vor Änderung des Messmodus basiert, und/oder
der ausgegebene Messbericht eine Information beinhaltet, die spezifiziert, dass der andere Messmodus nach Änderung des Messmodus für den oder ab dem nächsten Messbericht bzw. den nächsten Messberichten angewandt wird.

18. Einrichtung (910) nach einem der Ansprüche 11 bis 17, wobei
die einen Funkzugang betreffende Messung eine Messung von mindestens einem einer Funkverbindungsüberwachung, einer Strahlfehlerdetektion, einer Funkressourcenverwaltung und einer Referenzsignalempfangsleistung anbelangt oder umfasst.

19. Vorrichtung (910) nach einem der Ansprüche 11 bis 18, wobei
das Erstellen des Messberichts das Einbinden der Information in den Messbericht, der ein bestehender Messbericht ist, umfasst oder das Erzeugen eines Messberichts und Einbinden der Information in den erzeugten Messbericht umfasst, und/oder
der Messbericht über eine Funkressourcensignalisierung zur Steuerentität übertragen wird, und/oder
der Messbericht ein Messbericht ist, der eine aktuelle Messberichterstattungsperiode oder ein aktuelles Messberichterstattungsereignis betrifft.

20. Vorrichtung (910) nach einem der Ansprüche 11 bis 19, wobei
die Kommunikationsentität ein Kommunikationselement oder eine Kommunikationsfunktion ist, wie etwa eine Teilnehmereinrichtung, und/oder
die Steuerentität ein Steuerelement oder eine Steuerfunktion ist, wie etwa eine Basisstation oder ein Node B, und/oder
das drahtlose Kommunikationssystem auf einem 3GPP-Standard basiert, wie etwa einem 5G- oder einem NR-System.

21. Computerprogrammprodukt, das einen Computerprogrammcode umfasst, der, wenn der Computerprogrammcode auf einem Computer ausgeführt wird, dazu ausgelegt ist, den Computer zu veranlassen, das Verfahren nach einem der Ansprüche 1 bis 10 umzusetzen.

## Revendications

1. Procédé d'une entité de communication (910) dans un système de communication sans fil, comprenant les étapes suivantes :
décider (S110) d'un changement d'un mode de mesure d'une mesure liée à l'accès radio dans le système de communication sans fil entre un mode de mesure normal et un mode de mesure assoupli, dans lequel ledit mode de mesure assoupli, par comparaison avec ledit mode de mesure normal, offre un assouplissement à ladite entité de communication lors de la réalisation de ladite mesure liée à l'accès radio pour permettre une économie d'énergie au niveau de ladite entité de communication,
préparer (S120) un rapport de mesure comportant une information sur le changement du mode de mesure, ladite information précisant si le mode de mesure normal et/ou le mode de mesure assoupli est appliqué pour le rapport de mesure en cours et/ou le ou les rapports de mesure suivants, ou à partir de ceux-ci, et
émettre (S130) le rapport de mesure pour transmission à une entité de contrôle contrôlant et/ou desservant l'entité de communication.

2. Procédé selon la revendication 1, dans lequel ladite information comprend au moins l'un parmi :
une indication du ou des ou modes de mesure appliqués, et
au moins une caractéristique du ou des ou modes de mesure appliqués.

3. Procédé selon la revendication 2, dans lequel
l'indication précise que le mode de mesure normal, le mode de mesure assoupli ou un mélange des modes de mesure normal et assoupli est appliqué pour un rapport de mesure respectif, et/ou
les caractéristiques comprennent un ou plusieurs parmi une période de mesure ou d'évaluation dans le mode de mesure normal, une période de mesure ou d'évaluation dans le mode de mesure assoupli, un facteur d'échelle ou d'assouplissement pour prolonger la période de mesure ou d'évaluation dans le mode de mesure assoupli par comparaison avec le mode de mesure normal, et une relation entre une ou plusieurs propriétés de mesure entre le mode de mesure assoupli et le mode de mesure normal.

4. Procédé selon l'une des revendications 1 à 3, dans lequel la prise de décision (S110) comprend les étapes suivantes
vérifier (S610) qu'une condition de changement pour passer d'un mode de mesure actuellement appliqué à un autre mode de mesure est remplie, et
changer (S620) le mode de mesure pour appliquer l'autre mode de mesure.

5. Procédé selon la revendication 4, dans lequel
le rapport de mesure est émis lorsque le mode de mesure a été changé.

6. Procédé selon la revendication 4 ou 5, dans lequel
l'émission (S130, S430) du rapport de mesure est mise en attente, et le changement (S440) du mode de mesure est effectué lors de l'émission du rapport de mesure, ou
le changement (S620) du mode de mesure est effectué après avoir vérifié que la condition de changement est remplie, et l'émission (S640) du rapport de mesure est déclenchée par le changement du mode de mesure.

7. Procédé selon la revendication 5 ou 6, dans lequel
le rapport de mesure émis est basé sur l'application du mode de mesure actuellement appliqué avant le changement du mode de mesure, et/ou
le rapport de mesure émis comporte une information spécifiant que l'autre mode de mesure après le changement du mode de mesure est appliqué pour le ou les rapports de mesure suivants ou à partir de ceux-ci.

8. Procédé selon l'une des revendications 1 à 7, dans lequel
la mesure liée à l'accès radio concerne ou comprend la mesure d'au moins une parmi une surveillance de liaison radio, une détection de défaillances de faisceau, une gestion des ressources radio et une puissance reçue du signal de référence.

9. Procédé selon l'une des revendications 1 à 8, dans lequel
la préparation (S120) du rapport de mesure comprend l'inclusion de l'information dans le rapport de mesure qui est un rapport de mesure existant, ou comprend la génération d'un rapport de mesure et l'inclusion de l'information dans le rapport de mesure généré, et/ou
le rapport de mesure est transmis à l'entité de contrôle par le biais d'une signalisation des ressources radio, et/ou
le rapport de mesure est un rapport de mesure relatif à une période ou un à événement de rapport de mesure en cours.

10. Procédé selon l'une des revendications 1 à 9, dans lequel
l'entité de communication est un élément ou une fonction de communication, tel qu'un équipement utilisateur, et/ou
l'entité de contrôle est un élément ou une fonction de contrôle, tel qu'une station de base ou un noeud B, et/ou
le système de communication sans fil est basé sur une norme 3GPP, tel qu'un système 5G ou NR.

11. Appareil d'une entité de communication (910) dans un système de communication sans fil, comprenant :
des moyens pour décider (911) d'un changement d'un mode de mesure d'une mesure liée à l'accès radio dans le système de communication sans fil entre un mode de mesure normal et un mode de mesure assoupli, dans lequel ledit mode de mesure assoupli, par comparaison avec ledit mode de mesure normal, offre un assouplissement à ladite entité de communication lors de la réalisation de ladite mesure liée à l'accès radio pour permettre une économie d'énergie au niveau de ladite entité de communication,
des moyens pour préparer (912) un rapport de mesure comportant une information sur le changement du mode de mesure, ladite information précisant si le mode de mesure normal et/ou le mode de mesure assoupli est appliqué pour le rapport de mesure en cours et/ou le ou les rapports de mesure suivants, ou à partir de ceux-ci, et
des moyens pour émettre (913) le rapport de mesure pour transmission à une entité de contrôle contrôlant et/ou desservant l'entité de communication.

12. Appareil (910) selon la revendication 11, dans lequel ladite information comprend au moins l'un parmi :
une indication du ou des ou modes de mesure appliqués, et
au moins une caractéristique du ou des ou modes de mesure appliqués.

13. Appareil (910) selon la revendication 12, dans lequel
l'indication précise que le mode de mesure normal, le mode de mesure assoupli ou un mélange des modes de mesure normal et assoupli est appliqué pour un rapport de mesure respectif, et/ou
les caractéristiques comprennent un ou plusieurs parmi une période de mesure ou d'évaluation dans le mode de mesure normal, une période de mesure ou d'évaluation dans le mode de mesure assoupli, un facteur d'échelle ou d'assouplissement pour prolonger la période de mesure ou d'évaluation dans le mode de mesure assoupli par comparaison avec le mode de mesure normal, et une relation entre une ou plusieurs propriétés de mesure entre le mode de mesure assoupli et le mode de mesure normal.

14. Appareil (910) selon l'une des revendications 11 à 13, dans lequel la prise de décision comprend
la vérification du fait qu'une condition de changement pour passer d'un mode de mesure actuellement appliqué à un autre mode de mesure est remplie, et
le changement du mode de mesure pour appliquer l'autre mode de mesure.

15. Appareil (910) selon la revendication 14, dans lequel
le rapport de mesure est émis lorsque le mode de mesure a été changé.

16. Appareil (910) selon la revendication 14 ou 15, dans lequel
l'émission du rapport de mesure est mise en attente, et le changement du mode de mesure est effectué lors de l'émission du rapport de mesure, ou
le changement du mode de mesure est effectué après avoir vérifié que la condition de changement est remplie, et l'émission du rapport de mesure est déclenchée par le changement du mode de mesure.

17. Appareil (910) selon la revendication 15 ou 16, dans lequel
le rapport de mesure émis est basé sur l'application du mode de mesure actuellement appliqué avant le changement du mode de mesure, et/ou
le rapport de mesure émis comporte une information spécifiant que l'autre mode de mesure après le changement du mode de mesure est appliqué pour le ou les rapports de mesure suivants ou à partir de ceux-ci.

18. Appareil (910) selon l'une des revendications 11 à 17, dans lequel
la mesure liée à l'accès radio concerne ou comprend la mesure d'au moins une parmi une surveillance de liaison radio, une détection de défaillances de faisceau, une gestion des ressources radio et une puissance reçue du signal de référence.

19. Appareil (910) selon l'une des revendications 11 à 18, dans lequel
la préparation du rapport de mesure comprend l'inclusion de l'information dans le rapport de mesure qui est un rapport de mesure existant ou comprend la génération d'un rapport de mesure et l'inclusion de l'information dans le rapport de mesure généré, et/ou
le rapport de mesure est transmis à l'entité de contrôle par le biais d'une signalisation des ressources radio, et/ou
le rapport de mesure est un rapport de mesure relatif à une période ou un à événement de rapport de mesure en cours.

20. Appareil (910) selon l'une des revendications 11 à 19, dans lequel
l'entité de communication est un élément ou une fonction de communication, tel qu'un équipement utilisateur, et/ou
l'entité de contrôle est un élément ou une fonction de contrôle, tel qu'une station de base ou un noeud B, et/ou
le système de communication sans fil est basé sur une norme 3GPP, tel qu'un système 5G ou NR.

21. Produit de programme informatique comprenant un code de programme informatique qui, lorsque le code de programme informatique est exécuté sur un ordinateur, est configuré pour amener l'ordinateur à mettre en oeuvre le procédé selon l'une des revendications 1 à 10.
